(19) Europäisches Patentamt
European Patent Office
Office européen des brevets

(11) **EP 4 765 251 A1**

(12) **EUROPEAN PATENT APPLICATION**
published in accordance with Art. 153(4) EPC

(43) Date of publication:
**24.06.2026 Bulletin 2026/26**

(21) Application number: 25864599.3

(22) Date of filing: **10.09.2025**

(51) International Patent Classification (IPC):
$H01M\ 4/58^{(2010.01)}$    $H01M\ 4/505^{(2010.01)}$
$H01M\ 4/36^{(2006.01)}$    $H01M\ 4/131^{(2010.01)}$
$H01M\ 10/052^{(2010.01)}$    $H01M\ 4/02^{(2006.01)}$

(52) Cooperative Patent Classification (CPC):
**H01M 4/02; H01M 4/131; H01M 4/36; H01M 4/505; H01M 4/58; H01M 10/052; Y02E 60/10**

(86) International application number:
**PCT/KR2025/014127**

(87) International publication number:
**WO 2026/059325 (19.03.2026 Gazette 2026/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.09.2024 KR 20240123561**
          **09.09.2025 KR 20250128654**

(71) Applicant: **LG Energy Solution, Ltd.**
**Seoul 07335 (KR)**

(72) Inventors:
- **GWON, Hoe Yeong**
  **Daejeon 34122 (KR)**
- **PARK, Kang Joon**
  **Daejeon 34122 (KR)**
- **KWON, Woo Jeong**
  **Daejeon 34122 (KR)**
- **KIM, Su Bin**
  **Daejeon 34122 (KR)**
- **PARK, Seung Young**
  **Daejeon 34122 (KR)**
- **SHIM, Min Sub**
  **Daejeon 34122 (KR)**
- **PARK, Sin Young**
  **Daejeon 34122 (KR)**
- **LEE, Dong Hun**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, PREPARATION METHOD THEREFOR, AND LITHIUM SECONDARY BATTERY COMPRISING SAME**

(57)     The present invention relates to a positive electrode active material including a small-particle diameter lithium iron manganese phosphate-based oxide and a large-particle diameter lithium iron phosphate-based oxide, wherein the small-particle diameter lithium iron manganese phosphate-based oxide has an average particle diameter ($D_{50}$) of 1 $\mu$m or less, the large-particle diameter lithium iron phosphate-based oxide has an average particle diameter ($D_{50}$) of 4 $\mu$m to 10 $\mu$m, and the small-particle diameter lithium iron manganese phosphate-based oxide and the large-particle diameter lithium iron phosphate-based oxide are included in a weight ratio of 75:25 to 98:2.

# EP 4 765 251 A1

## Description

### TECHNICAL FIELD

This application claims priority from Korean Patent Application Nos. 10-2024-0123561, filed on September 10, 2024, and 10-2025-0128654, filed on September 9, 2025, the disclosures of which are incorporated by reference herein.

The present invention relates to a positive electrode active material, a method of preparing the same, and a lithium secondary battery including the same, and more particularly, to a positive electrode active material having a bimodal particle size distribution with excellent rolling density and a positive electrode and a lithium secondary battery which include the same.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Among these, a positive electrode active material included in the positive electrode is a material that plays a major role in determining capacity, output, and lifetime of the battery. An improvement in performance of the positive electrode active material is essential in order for the lithium secondary battery to have high energy density, output, and lifetime, and, as a result, a significant amount of research has been conducted recently to develop a high-performance positive electrode active material.

Lithium transition metal oxides, for example, a lithium cobalt-based oxide such as $LiCoO_2$, a lithium nickel-based oxide such as $LiNiO_2$, a lithium manganese-based oxide such as $LiMnO_2$ or $LiMn_2O_4$, and a lithium iron phosphate-based compound, such as $LiFePO_4$, have been developed as a positive electrode active material of the lithium secondary battery, and recently, lithium composite transition metal oxides including two or more transition metals, such as $Li[Ni_aCo_dMn_c]O_2$, $Li[Ni_aCo_bAl_c]O_2$, and $Li[Ni_aCo_bMn_cAl_d]O_2$, have been developed and widely used.

Since the lithium iron phosphate-based compound having an olivine structure has the best structural stability, it has excellent life characteristics and is a promising active material with excellent advantages in all aspects of safety, including overcharge and overdischarge.

Particularly, $LiFePO_4$ has excellent high-temperature stability due to a strong binding force of $PO_4$, is less expensive than the above-described $LiCoO_2$, $LiNiO_2$, or $LiMn_2O_4$ because it includes abundant and inexpensive iron, and has a low impact on the environment due to low toxicity. However, since the $LiFePO_4$ has low electrical conductivity, there is a problem in that internal resistance of a battery increases when the $LiFePO_4$ is used as a positive electrode active material. Also, the $LiFePO_4$ has a limitation in that it may not sufficiently increase energy density of the battery because its density is lower than that of a conventional positive electrode active material, and since it typically has a form of a secondary particle that is assembled from primary particles, there is a problem in that output characteristics are poor due to large interfacial resistance between the primary particles.

In order to solve this, there has been an attempt to use manganese-doped $LiFePO_4$. However, in a case in which the manganese-doped $LiFePO_4$, i.e., a lithium iron manganese phosphate-based compound is used in a battery, an average operating voltage is increased, but since capacity is low, there is a problem in that an amount of energy density realistically increased is reduced.

### DISCLOSURE OF THE INVENTION

### TECHNICAL PROBLEM

An aspect of the present invention provides a positive electrode active material having excellent rolling density by imparting bimodal particle size characteristics through mixing a small amount of a large-particle diameter lithium iron phosphate-based compound in a form of a secondary particle with a small-particle diameter lithium iron manganese phosphate-based compound.

Also, another aspect of the present invention provides a positive electrode and a secondary battery which have excellent energy density by including the positive electrode active material as described above.

### TECHNICAL SOLUTION

[1] The present invention provides a positive electrode active material including a small-particle diameter lithium iron manganese phosphate-based oxide and a large-particle diameter lithium iron phosphate-based oxide, wherein the small-particle diameter lithium iron manganese phosphate-based oxide has an average particle diameter ($D_{50}$) of 1 $\mu$m or less, the large-particle diameter lithium iron phosphate-based oxide has an average particle diameter ($D_{50}$) of 4 $\mu$m to 10 $\mu$m, and the small-particle diameter lithium iron manganese phosphate-based oxide and the large-particle diameter lithium iron phosphate-based oxide are included in a weight ratio of 75:25 to 98:2.

[2] The present invention provides the positive electrode active material of [1] above, wherein the average particle diameter ($D_{50}$) of the small-particle diameter lithium iron manganese phosphate-based oxide is 0.5 $\mu$m or less.

[3] The present invention provides the positive electrode active material of [1] or [2] above, wherein the small-particle diameter lithium iron manganese phosphate-based oxide and the large-particle diameter lithium iron phosphate-based oxide are included in a weight ratio of 90:10 to 95:5.

[4] The present invention provides the positive electrode active material of at least one of [1] to [3] above, wherein the small-particle diameter lithium iron manganese phosphate-based oxide has a composition of Formula 1.

$$[Formula\ 1]\qquad Li_{1+x}Fe_{1-p-q}Mn_pM_q(PO_4)$$

In Formula 1, M is at least one selected from the group consisting of nickel (Ni), cobalt (Co), aluminum (Al), zirconium (Zr), strontium (Sr), tungsten (W), molybdenum (Mo), chromium (Cr), niobium (Nb), magnesium (Mg), hafnium (Hf), tantalum (Ta), lanthanum (La), titanium (Ti), boron (B), barium (Ba), cerium (Ce), tin (Sn), yttrium (Y), vanadium (V), and zinc (Zn), and $-0.1 \leq x \leq 0.1$, $0.4 \leq p \leq 0.8$, and $0 \leq q \leq 0.1$.

[5] The present invention provides the positive electrode active material of [1] or [4] above, wherein the large-particle diameter lithium iron phosphate-based oxide is in a form of a secondary particle that is an aggregate of primary particles.

[6] The present invention provides the positive electrode active material of at least one of [1] to [5] above, wherein the large-particle diameter lithium iron phosphate-based oxide has a composition of Formula 2.

$$[Formula\ 2]\qquad LiFe_{1-y}M'_yPO_4$$

In Formula 2, M' is at least one selected from the group consisting of Ni, Co, Al, Mg, Y, Zn, indium (In), ruthenium (Ru), Sn, antimony (Sb), Ti, tellurium (Te), Nb, Mo, Cr, Zr, W, iridium (Ir), and V, and $0 \leq y < 1$.

[7] The present invention provides the positive electrode active material of at least one of [1] to [6] above, wherein the positive electrode active material has a bimodal particle size distribution.

[8] The present invention provides the positive electrode active material of at least one of [1] to [7] above, wherein the positive electrode active material has a $D_{10}$ of 0.25 $\mu$m to 0.90 $\mu$m.

[9] The present invention provides the positive electrode active material of at least one of [1] to [8] above, wherein the positive electrode active material has a $D_{50}$ of 0.4 $\mu$m to 1.0 $\mu$m.

[10] The present invention provides the positive electrode active material of at least one of [1] to [9] above, wherein the positive electrode active material has a $D_{90}$ of 3.1 $\mu$m to 10.0 $\mu$m.

[11] The present invention provides the positive electrode active material of at least one of [1] to [10] above, wherein the positive electrode active material has a rolling density measured after being pressed at 9 tons of 2.58 g/cc or more.

[12] The present invention provides a positive electrode for a lithium secondary battery which includes the positive electrode active material of at least one of [1] to [11] above.

[13] The present invention provides the positive electrode for a lithium secondary battery of [12] above, wherein the positive electrode has a charged volumetric energy density of 1533 Wh/L or more.

[14] The present invention provides a lithium secondary battery including the positive electrode for a lithium secondary battery of [12] or [13] above.

## ADVANTAGEOUS EFFECTS

In a positive electrode active material according to the present invention, since a large-particle diameter lithium iron phosphate-based oxide is mixed with a small-particle diameter lithium iron manganese phosphate-based oxide in a weight ratio of 75:25 to 98:2 so that a small-particle diameter positive electrode active material is allowed to fill voids between large-particle diameter positive electrode active materials, the positive electrode active material according to the present invention may improve rolling density and thus enhance energy density of an electrode when used in a positive electrode for a secondary battery.

Accordingly, a secondary battery with excellent high-temperature life characteristics, output characteristics, and capacity characteristics may be achieved.

**MODE FOR CARRYING OUT THE INVENTION**

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular embodiments only and is not intended to be limiting of the invention. The terms of a singular form may include plural forms unless referred to the contrary.

In the present invention, it will be further understood that the terms "include," "comprise," or "have" specify the presence of stated features, numbers, steps, elements, or combinations thereof, but do not preclude the presence or addition of one or more other features, numbers, steps, elements, or combinations thereof. In addition, in this specification, when a part such as a layer, film, region, or plate is said to be on another part, the direction in which it is formed is not limited to the upper direction, and includes being formed in the side or lower direction.

A "primary particle" in the present invention means a particle unit in which a grain boundary does not exist in appearance when observed by using a scanning electron microscope with a field of view of 5,000 times to 20,000 times.

A "secondary particle" in the present invention means a particle formed by aggregation of a plurality (tens to hundreds) of primary particles. More specifically, the secondary particle is an aggregate of 30 or more primary particles.

The expression "particle" used in the present invention may include either one or both of the primary particle and the secondary particle.

"$D_x$" in the present invention means a particle size on the basis of x% in a volume cumulative particle size distribution of a positive electrode active material. The $D_x$ may be measured by using a laser diffraction method. For example, after dispersing positive electrode active material powder in a dispersion medium, the dispersion medium is introduced into a commercial laser diffraction particle size measurement instrument (e.g., Malvern Mastersizer 3000) and then irradiated with ultrasonic waves of about 28 kHz at an output of 60 W to obtain a volume cumulative particle size distribution graph, and the $D_x$ may then be measured by obtaining a particle size corresponding to x% of volume accumulation.

"Rate capability" in the present invention refers to a characteristic of capacity exhibited according to a charge-discharge rate of a lithium secondary battery, wherein a positive electrode having high rate capability means a positive electrode capable of exhibiting high capacity even at high charge-discharge rates. For example, after charging a lithium secondary battery under the same conditions, the rate capability may be evaluated as a capacity development ratio (%) that is calculated from a ratio of discharge capacity measured at a discharge rate of 1C or higher to that measured at 0.1C-rate at the same voltage and temperature.

Hereinafter, the present invention will be described in more detail.

The present inventors have found that in a case in which particle sizes and mixing ratio of a lithium iron manganese phosphate-based oxide having excellent rate capability and a high average voltage and a lithium iron phosphate-based oxide having relatively excellent capacity characteristics are controlled in order to improve energy density and rate capability of a lithium secondary battery, a lithium secondary battery having excellent energy density and rate capability may be achieved, thereby leading to the completion of the present invention.

Since the lithium iron manganese phosphate-based oxide and lithium iron phosphate-based oxide having an olivine structure have a one-dimensional lithium ion diffusion path within their crystal structures, they have a problem of low lithium ion conductivity during charge and discharge.

Among these, the lithium iron manganese phosphate-based oxide is a positive electrode active material in which a part of iron (Fe) in an Fe-based olivine-structured lithium oxide is substituted with manganese (Mn) to increase an operating voltage, wherein it has excellent rate capability, but there is a limit to increasing a solid content in a slurry due to a small particle diameter, and it is difficult to achieve a high-density electrode because rolling is unfavorable.

In contrast, since the lithium iron phosphate-based compound has higher electronic conductivity and lithium ion conductivity than the lithium iron manganese phosphate-based compound, it has excellent charging output and has a small influence on battery performance even if an average particle diameter is increased, but there is a problem in that energy density is low due to low operating voltage.

In a case in which large-diameter particles and small-diameter particles having different average particle diameters ($D_{50}$) are mixed and used, since the small-diameter particles fill voids between the large-diameter particles, electrode coating is possible with a relatively high rolling density in comparison to a case where particles having a single type of average particle diameter are used, and as a result, energy density of an electrode may be increased.

Accordingly, in order to secure high energy density by increasing a solid content in a slurry and to improve rolling density through bimodalization of a particle size distribution by mixing a large-particle diameter lithium iron phosphate-based oxide having a controlled particle size with a small-particle diameter lithium iron manganese phosphate-based oxide, the present invention aims to derive an appropriate particle diameter and a mixing ratio of each oxide and apply them to a lithium secondary battery.

Hereinafter, a configuration of the present invention will be described in more detail.

A positive electrode active material according to the present invention and a positive electrode and a lithium secondary, which include the same, include at least one of configurations disclosed below, and may include any combination between technically possible configurations among the configurations below.

**Positive Electrode Active Material**

The positive electrode active material according to the present invention includes a small-particle diameter lithium iron manganese phosphate-based oxide and a large-particle diameter lithium iron phosphate-based oxide, wherein the small-particle diameter lithium iron manganese phosphate-based oxide has an average particle diameter $(D_{50})$ of 1 $\mu$m or less, the large-particle diameter lithium iron phosphate-based oxide has an average particle diameter $(D_{50})$ of 4 $\mu$m to 10 $\mu$m, and the small-particle diameter lithium iron manganese phosphate-based oxide and the large-particle diameter lithium iron phosphate-based oxide are included in a weight ratio of 75:25 to 98:2.

The small-particle diameter lithium iron manganese phosphate-based oxide may have an average particle diameter $(D_{50})$ of 1 $\mu$m or less, specifically 0.9 $\mu$m or less, more specifically 0.8 $\mu$m or less, even more specifically 0.7 $\mu$m or 0.6 $\mu$m or less, and most specifically 0.5 $\mu$m or less. When the average particle diameter of the lithium iron manganese phosphate-based oxide satisfies the above-described range, rate capability may be excellent, particles of the lithium iron manganese phosphate-based oxide having a small particle diameter of 1 $\mu$m or less may more densely fill voids between the large-particle diameter lithium iron phosphate-based oxides, and energy density may be improved. Also, since an ion movement path is shortened to reduce resistance within an electrode and relieve stress, low resistance characteristics and excellent life characteristics may be achieved, and as a result, overall performance of the battery may be improved.

The small-particle diameter lithium iron manganese phosphate-based oxide may be in a form of a primary particle which is a primary structure of a single particle.

The small-particle diameter lithium iron manganese phosphate-based oxide may have a composition of Formula 1 below.

[Formula 1]     $Li_{1+x}Fe_{1-p-q}Mn_pM_q(PO_4)$

In Formula 1, M may include at least one selected from the group consisting of nickel (Ni), cobalt (Co), aluminum (Al), zirconium (Zr), strontium (Sr), tungsten (W), molybdenum (Mo), chromium (Cr), niobium (Nb), magnesium (Mg), hafnium (Hf), tantalum (Ta), lanthanum (La), titanium (Ti), boron (B), barium (Ba), cerium (Ce), tin (Sn), yttrium (Y), vanadium (V), and zinc (Zn). M is not essentially included, but when M is included in an appropriate amount, a particle shape of the positive electrode active material may be improved, and stability of a crystal structure may be improved.

x in Formula 1 satisfies $-0.1 \leq x \leq 0.1$. When x satisfies the above range, high-capacity characteristics and high energy density per unit volume may be achieved.

p in Formula 1 is a mole fraction of manganese among total metals excluding lithium in the lithium iron manganese phosphate-based oxide, wherein p may be 0.4 or more or 0.5 or more, and may be 0.8 or less or 0.7 or less. When the above-described range is satisfied, high energy density may be exhibited.

q in Formula 1 is a mole fraction of M among the total metals excluding lithium in the lithium iron manganese phosphate-based oxide, wherein q may be 0 or more, 0.01 or more, 0.02 or more, 0.03 or more, 0.04 or more, 0.05 or more, 0.06 or more, 0.07 or more, 0.08 or more, 0.09 or more, or 0.1 or more, and may be 0.2 or less, 0.19 or less, 0.18 or less, 0.17 or less, 0.16 or less, 0.15 or less, 0.14 or less, 0.13 or less, 0.12 or less, or 0.11 or less. When q satisfies the above range, structural stability of the lithium iron manganese phosphate-based oxide may be improved.

The large-particle diameter lithium iron phosphate-based oxide may have an average particle diameter $(D_{50})$ of 4 $\mu$m or more, specifically 4.5 $\mu$m or more, more specifically 5 $\mu$m or more or 5.5 $\mu$m or more, and even more specifically 6 $\mu$m or more, and may have an average particle diameter $(D_{50})$ of 10 $\mu$m or less, specifically 9.5 $\mu$m or less, more specifically 9 $\mu$m or 8.5 $\mu$m or less, and even more specifically 8 $\mu$m or less. When the above range is satisfied, since slurry processability of the positive electrode active material becomes excellent and it is advantageous in terms of space utilization by having a wide bimodal particle size distribution, rolling density may be improved, energy density of the electrode may be increased, and efficiency and rate capability may be excellent.

The large-particle diameter lithium iron phosphate-based oxide may be in a form of a secondary particle that is an aggregate of primary particles. When the lithium iron phosphate-based oxide is in the form of a secondary particle, the average particle diameter may increase, a decrease in dispersibility due to aggregation between particles during preparation of a positive electrode may be suppressed, and high energy density may be secured.

The large-particle diameter lithium iron phosphate-based oxide may have a composition of Formula 2 below.

[Formula 2]     $LiFe_{1-y}M'_yPO_4$

In Formula 2, M' may include at least one selected from the group consisting of Ni, Co, Al, Mg, Y, Zn, indium (In), ruthenium (Ru), Sn, antimony (Sb), Ti, tellurium (Te), Nb, Mo, Cr, Zr, W, iridium (Ir), and V. M' is not essentially included, but when M' is included in an appropriate amount, conductivity and capacity characteristics may be improved.

y in Formula 2 is a mole fraction of M' among total metals excluding lithium in the lithium iron phosphate-based oxide, wherein y may satisfy $0 \leq y < 1$.

The positive electrode active material may have a bimodal particle size distribution. In a case in which the positive electrode active material has a bimodal particle size distribution, the rolling density may be improved by filling the voids between the large-diameter particles with the small-diameter particles, and stress during rolling may be distributed to prevent particle breakage.

The positive electrode active material may have a $D_{10}$ of 0.25 μm to 0.90 μm, specifically 0.25 μm to 0.80 μm, more specifically 0.25 μm to 0.70 μm or 0.25 μm to 0.60 μm, even more specifically 0.25 μm to 0.50 μm or 0.25 μm to 0.40 μm, and most specifically 0.25 μm to 0.30 μm. When the above range is satisfied, a distinct bimodal particle size distribution may be achieved.

The positive electrode active material may have a $D_{50}$ of 0.4 μm to 1.0 μm, specifically 0.4 μm to 0.9 μm, more specifically 0.4 μm to 0.8 μm, and most specifically 0.4 μm to 0.7 μm. When the above range is satisfied, since the small-particle diameter lithium iron manganese phosphate-based oxide may be appropriately distributed between the large-particle diameter lithium iron phosphate-based oxides, a packing ratio may be excellent.

The positive electrode active material may have a $D_{90}$ of 3.1 μm to 10.0 μm, specifically 3.2 μm to 9.5 μm, more specifically 3.3 μm to 9.0 μm, and most specifically 3.4 μm to 8.5 μm. When the above range is satisfied, a distinct bimodal particle size distribution may be achieved.

The positive electrode active material may have a rolling density measured after being pressed at 3 tons of 2.35 g/cc, specifically, 2.38 g/cc or more.

The positive electrode active material may have a rolling density measured after being pressed at 6 tons of 2.48 g/cc, specifically, 2.50 g/cc or more.

The positive electrode active material may have a rolling density measured after being pressed at 9 tons of 2.58 g/cc, specifically, 2.59 g/cc or more. In a case in which the positive electrode active material satisfies the above range, high energy density may be achieved.

The small-particle diameter lithium iron manganese phosphate-based oxide and the large-particle diameter lithium iron phosphate-based oxide may be included in a weight ratio of 75:25 to 98:2, specifically in a weight ratio of 80:20 to 98:2, more specifically in a weight ratio of 83:17 to 97:3, even more specifically in a weight ratio of 85:15 to 96:4, and most specifically in a weight ratio of 90:10 to 95:5. In a case in which the above range is satisfied, an effect of improving the energy density due to the bimodalization of the particle size distribution may be maximized while maintaining the rate capability of the lithium iron manganese phosphate-based oxide, and when the small-particle diameter lithium iron manganese phosphate-based oxide and the large-particle diameter lithium iron phosphate-based oxide are included in a weight ratio of 90:10 to 95:5, the best energy density may be achieved by minimizing a loss due to a decrease in average operating voltage according to the addition of the lithium iron phosphate-based oxide while improving tap density and rolling density.

## Positive Electrode

The present invention provides a positive electrode including the positive electrode active material.

The positive electrode according to the present invention includes a positive electrode active material layer including the positive electrode active material according to the present invention. Specifically, the positive electrode includes a positive electrode collector and a positive electrode active material layer formed on the positive electrode collector and including the positive electrode active material. Since the positive electrode active material has been described above, detailed descriptions thereof will be omitted and the remaining configurations will be only described in detail below.

The positive electrode collector is not particularly limited as long as it has conductivity without causing chemical changes in the battery, and, for example, stainless steel, aluminum, nickel, titanium, fired carbon, or aluminum or stainless steel that is surface-treated with carbon, nickel, titanium, silver, or the like may be used. Also, the positive electrode collector may typically have a thickness of 3 μm to 500 μm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a positive electrode conductive agent and a positive electrode binder in addition to the positive electrode active material. In this case, the positive electrode active material may be included in an amount of 80 wt% to 99 wt%, more specifically, 85 wt% to 98.5 wt% based on a total weight of the positive electrode active material layer, and excellent capacity characteristics may be obtained within this range.

The positive electrode conductive agent is used to provide conductivity to the electrode, wherein any conductive agent may be used without particular limitation as long as it has suitable electron conductivity without causing chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The positive electrode conductive agent may be included in an amount of 0.1 wt% to 15 wt% based on the total weight of the positive electrode active material layer.

The positive electrode binder improves adhesion between the positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The positive electrode binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the above-described positive electrode active material as well as optionally the binder and the conductive agent in a solvent, is applied onto the positive electrode collector, and the positive electrode may then be prepared by drying and rolling the coated positive electrode collector. In this case, types and amounts of the positive electrode active material, the binder, and the conductive agent are the same as those previously described. Also, as another method, the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

The positive electrode according to the present invention may have an initial charge/discharge capacity efficiency of 96.4% or more, specifically 96.5% or more, and more specifically 96.6% or more when charged and discharged at 0.1 C-rate.

The positive electrode according to the present invention may have a charged volumetric energy density of 1533 Wh/L or more, specifically 1534 Wh/L or more, more specifically 1535 Wh/L or more, and even more specifically 1536 Wh/L or more.

**Lithium Secondary Battery**

Next, a lithium secondary battery according to the present invention will be described.

The lithium secondary battery according to the present invention includes a positive electrode for a lithium secondary battery according to the present invention. Specifically, the lithium secondary battery according to the present invention includes the positive electrode, a negative electrode disposed to face the positive electrode, and an electrolyte. Optionally, the lithium secondary battery according to the present invention may further include a separator disposed between the positive electrode and the negative electrode.

Since the positive electrode is the same as described above, the remaining components excluding the positive electrode will be described below.

(1) Negative Electrode

In the lithium secondary battery according to the present invention, the negative electrode includes a negative electrode active material layer including a negative electrode active material, and specifically, may include a negative electrode collector and a negative electrode active material layer disposed on at least one side of the negative electrode collector.

The negative electrode collector is not particularly limited as long as it has high conductivity without causing chemical changes in the battery, and, for example, copper, stainless steel, aluminum, nickel, titanium, fired carbon, copper or stainless steel that is surface-treated with carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may be disposed on the negative electrode collector, and may specifically be disposed on one side or both sides of the negative electrode collector. The negative electrode active material layer may have a single-layer structure or a multilayer structure of two or more layers.

In a case in which the negative electrode active material layer has a multilayer structure composed of two or more layers, each layer may have different types and/or amounts of the negative electrode active material, a negative electrode binder, and/or a negative electrode conductive agent. Performance characteristics, such as rapid charging performance and output characteristics, of the battery may be appropriately controlled by forming the negative electrode active material layer into a multilayer structure and varying a composition of each layer.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used.

Both low crystalline carbon and high crystalline carbon may be used as the carbonaceous material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Specifically, the negative electrode active material may be a carbon-based negative electrode active material, and in this case, the carbon-based negative electrode active material, for example, may include natural graphite, artificial graphite, graphitized carbon fibers, amorphous carbon, soft carbon, hard carbon, or a combination thereof. More preferably, the carbon-based negative electrode active material may include natural graphite and artificial graphite.

The carbon-based negative electrode active material may have an average particle diameter $D_{50}$ of 0.1 $\mu$m to 30 $\mu$m, preferably 0.5 $\mu$m to 30 $\mu$m.

The negative electrode active material may be included in an amount of 80 wt% to 98 wt%, preferably 90 wt% to 98 wt%, and more preferably 93 wt% to 98 wt% based on a total weight of the negative electrode active material layer. When the amount of the negative electrode active material satisfies the above range, excellent energy density may be achieved.

The negative electrode active material layer may further include a negative electrode conductive agent and a negative electrode binder together with the negative electrode active material.

The negative electrode conductive agent is used to provide conductivity to the negative electrode, wherein any conductive agent may be used without particular limitation as long as it has electron conductivity without causing chemical changes in the battery. Specific examples of the negative electrode conductive agent may be a carbon-based material such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The negative electrode conductive agent may be typically included in an amount of 0.1 wt% to 10 wt%, specifically 0.1 wt% to 8 wt%, and more specifically 0.1 wt% to 5 wt% based on the total weight of the negative electrode active material layer.

The negative electrode binder improves adhesion between the negative electrode active material particles and adhesion between the negative electrode active material and the negative electrode collector. Specific examples of the negative electrode binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluoro rubber, and various copolymers thereof, and any one thereof or a mixture of two or more thereof may be used.

The negative electrode binder may be included in an amount of 0.1 wt% to 10 wt%, preferably 0.5 wt% to 10 wt%, and more preferably 1 wt% to 8 wt% based on the total weight of the negative electrode active material layer.

The negative electrode may be prepared by a method known in the art. For example, after a negative electrode slurry is prepared by mixing the negative electrode active material, the negative electrode binder, and/or the negative electrode conductive agent in a solvent and is applied onto the negative electrode collector, the negative electrode may be prepared by drying and rolling the coated negative electrode collector or the negative electrode may be prepared by casting the negative electrode slurry on a separate support and then laminating a film separated from the support on the negative electrode collector.

As the solvent of the negative electrode slurry, solvents normally used in the art may be used, and, for example, dimethyl sulfoxide (DMSO), isopropyl alcohol, N-methylpyrrolidone (NMP), acetone, water, or a mixture of thereof may be used, but the present invention is not limited thereto. The solvent may be used in an amount such that it dissolves or disperses the negative electrode active material, the negative electrode conductive agent, and the negative electrode binder, and has a viscosity that allows the negative electrode slurry to be uniformly applied.

(2) Electrolyte

The electrolyte according to the present invention may include a lithium salt and an organic solvent.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, LiFSI, or $LiB(C_2O_4)_2$ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

The organic solvent may include at least one selected from the group consisting of a cyclic carbonate-based organic solvent, a linear carbonate-based organic solvent, a linear ester-based organic solvent, and a cyclic ester-based organic solvent.

The cyclic carbonate-based organic solvent is a highly viscous organic solvent, wherein the cyclic carbonate-based organic solvent may typically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

The cyclic ester-based organic solvent may include at least one organic solvent selected from the group consisting of butyrolactone, valerolactone, and caprolactone.

Preferably, the electrolyte according to the present invention may include ethylene carbonate and dimethyl carbonate as the organic solvent.

In order to improve life characteristics of the battery, suppress the reduction in battery capacity, and improve discharge capacity of the battery, the electrolyte may further include other additives in addition to the above electrolyte components.

As representative examples, the other additives may include at least one other additive selected from the group consisting of a cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

Specifically, the other additives may include one or more compounds selected from the group consisting of vinylene carbonate (VC), vinyl ethylene carbonate, fluoroethylene carbonate (FEC), 1,3-propane sultone (PS), 1,4-butane sultone, ethane sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (Lithium bis(fluorosulfonyl)imide, LiFSI), $LiN(SO_2CF_3)_2$ (lithium bis(trifluoromethane sulfonyl)imide, LiTFSI), $LiPO_2F_2$, LiODFB, LiBOB (lithium bis(oxalato)borate, $LiB(C_2O_4)_2$), and

LiBF$_4$.

The other additives may be included in an amount of 0.01 wt% to 20 wt%, and may preferably be included in an amount of 0.05 wt% to 5.0 wt% based on a total weight of the electrolyte. If the amount of the other additives is less than 0.01 wt%, effects of improving low-temperature output, high-temperature storage characteristics, and high-temperature life characteristics of the battery are insignificant, and, if the amount of the other additives is greater than 20 wt%, there is a possibility that a side reaction in the electrolyte occurs excessively during charge and discharge of the battery. Particularly, since the other additives may not be sufficiently decomposed at high temperatures when an excessive amount of the additives for forming a solid electrolyte interface (SEI) layer is added, the other additives may be present in the form of an unreacted material or precipitates in the electrolyte at room temperature. Accordingly, a side reaction may occur in which life or resistance characteristics of the secondary battery are degraded.

(3) Separator

The separator separates the negative electrode and the positive electrode and provides a movement path of lithium ions, wherein any separator may be used as the separator without particular limitation as long as it is typically used in a lithium secondary battery. In this case, the separator may be disposed between the positive electrode and the negative electrode.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The lithium secondary battery according to the present invention as described above may be suitably used in portable devices, such as mobile phones, notebook computers, and digital cameras, and electric cars such as hybrid electric vehicles (HEVs). The lithium secondary battery according to the present invention may be particularly useful in the field of electric vehicles because it may achieve excellent output characteristics even under low-temperature conditions.

According to another embodiment of the present invention, a battery module including the lithium secondary battery according to the present invention as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, the present invention will be described in more detail, according to specific examples.

**Preparation of Preparation Examples, Examples and Comparative Examples**

Small-particle diameter lithium iron manganese phosphate-based oxide

A lithium iron manganese phosphate-based oxide having a molar ratio of Li:Mn:Fe:PO$_4$ of 1.06:0.60:0.40:1.02 and an average particle diameter $D_{50}$ of 0.4 $\mu$m was prepared as a small-particle diameter lithium iron manganese phosphate-based oxide.

**Large-particle diameter lithium iron phosphate-based oxide**

A lithium iron phosphate-based oxide, as secondary particle powder that is an aggregate of primary particles, having a molar ratio of Li:Fe:PO$_4$ of 1.08:1.00:1.03 and an average particle diameter $D_{50}$ of 7.2 $\mu$m was prepared as a large-particle diameter lithium iron phosphate-based oxide.

**Small-particle diameter lithium iron phosphate-based oxide**

A lithium iron phosphate-based oxide having a molar ratio of Li:Fe:PO$_4$ of 1.07:1.00:1.06 and an average particle diameter $D_{50}$ of 1.02 $\mu$m was prepared as a small-particle diameter lithium iron phosphate-based oxide.

The lithium iron manganese phosphate-based oxide and lithium iron phosphate-based oxides prepared as described above were mixed in weight ratios listed in Table 1 below to prepare positive electrode active materials of Examples 1 and 2 and Comparative Examples 1 to 9.

[Table 1]

| | Small-particle diameter lithium iron manganese phosphate-based oxide (0.4 $\mu$m) | Large-particle diameter lithium iron phosphate-based oxide(7.2 $\mu$m) | Small-particle diameter lithium iron phosphate-based oxide(1.02 $\mu$m) |
|---|---|---|---|
| Example 1 | 95 | 5 | 0 |
| Example 2 | 90 | 10 | 0 |
| Comparative Example 1 | 100 | 0 | 0 |
| Comparative Example 2 | 40 | 60 | 0 |
| Comparative Example 3 | 30 | 70 | 0 |
| Comparative Example 4 | 20 | 80 | 0 |
| Comparative Example 5 | 10 | 90 | 0 |
| Comparative Example 6 | 0 | 100 | 0 |
| Comparative Example 7 | 95 | 0 | 5 |
| Comparative Example 8 | 90 | 0 | 10 |
| Comparative Example 9 | 0 | 0 | 100 |

## Experimental Example 1: Particle Size Distribution Analysis

In order to compare particle size distributions of the examples and the comparative examples, volume cumulative particle size distribution graphs of the examples and Comparative Examples 1 and 6 to 9 were obtained using a laser diffraction method, and $D_0$, $D_{10}$, $D_{50}$, $D_{90}$, and $D_{100}$ are then presented in Table 2 below.

[Table 2]

| | [$\mu$m] | | | | |
|---|---|---|---|---|---|
| | $D_0$ | $D_{10}$ | $D_{50}$ | $D_{90}$ | $D_{100}$ |
| Example 1 | 0.189 | 0.29 | 0.46 | 3.73 | 40.0 |
| Example 2 | 0.189 | 0.29 | 0.48 | 8.27 | 40.1 |
| Comparative Example 1 | 0.189 | 0.27 | 0.40 | 0.62 | 0.87 |
| Comparative Example 6 | 0.360 | 1. 88 | 7.20 | 17.3 | 40.1 |
| Comparative Example 7 | 0.189 | 0.28 | 0.45 | 0.82 | 5.90 |
| Comparative Example 8 | 0.189 | 0.29 | 0.46 | 0.97 | 5.89 |
| Comparative Example 9 | 0.244 | 0.45 | 1.02 | 3.07 | 5.89 |

Referring to the results in Table 2, it may be confirmed that '$D_{100}$-$D_0$' and '$D_{90}$-$D_{10}$' values of Examples 1 and 2, in which the lithium iron phosphate-based oxide having an average particle diameter $D_{50}$ of 7.2 $\mu$m was mixed with the lithium iron manganese phosphate-based oxide having an average particle diameter $D_{50}$ of 0.4 $\mu$m, were greater than those of Comparative Examples 7 and 8 in which the lithium iron phosphate-based oxide having an average particle diameter $D_{50}$ of 1.02 $\mu$m was mixed with the lithium iron manganese phosphate-based oxide having an average particle diameter $D_{50}$ of 0.4 $\mu$m, and it means that they had a much wider and more distinct bimodal particle size distribution.

## Experimental Example 2: Rolling Density Evaluation

Rolling density of each of the positive electrode active materials of the examples and comparative examples prepared in the preparation examples was measured using a density meter (Caver Pellet Press). Specifically, after 1 g of each of the positive electrode active materials prepared in the examples and the comparative examples was taken and densely packed into a cylindrical holder having a diameter of 13 mm, rolling densities were measured by applying pressures of 3 tons, 6 tons, and 9 tons, respectively.

Measurement results of the rolling density are as shown in Table 3 below.

[Table 3]

| | Rolling density [g/cc] | | |
|---|---|---|---|
| Pressure | 3 ton | 6 ton | 9 ton |
| Example 1 | 2.388 | 2.518 | 2.591 |
| Example 2 | 2.408 | 2.537 | 2.614 |
| Comparative Example 1 | 2.370 | 2.502 | 2.570 |
| Comparative Example 2 | 2.308 | 2.462 | 2.541 |
| Comparative Example 3 | 2.301 | 2.460 | 2.540 |
| Comparative Example 4 | 2.295 | 2.457 | 2.540 |
| Comparative Example 5 | 2.289 | 2.454 | 2.539 |
| Comparative Example 6 | 2.282 | 2.452 | 2.539 |
| Comparative Example 7 | 2.381 | 2.510 | 2.577 |
| Comparative Example 8 | 2.510 | 2.527 | 2.592 |
| Comparative Example 9 | 2.577 | 2.592 | 2.676 |

In Table 3, when comparing the results of Comparative Example 6 composed only of the large-particle diameter lithium iron phosphate-based oxide, Comparative Example 9 composed only of the small-particle diameter lithium iron phosphate-based oxide, and Comparative Example 1 composed only of the small-particle diameter lithium iron manganese phosphate-based oxide, it may be understood that the large-particle diameter lithium iron phosphate-based oxide had a lower rolling density than not only the small-particle diameter lithium iron phosphate-based oxide but also the small-particle diameter lithium iron manganese phosphate-based oxide, but nevertheless, it may be confirmed from the results of Examples 1 and 2 that in a case in which a small amount of the large-particle diameter lithium iron phosphate-based oxide was mixed with the small-particle diameter lithium iron manganese phosphate-based oxide, the rolling density may be improved in comparison to Comparative Example 1 that was the positive electrode active material composed only of the lithium iron manganese phosphate-based oxide. Particularly, when comparing the results of Examples 1 and 2 and Comparative Examples 1 to 5, it may be confirmed that Comparative Examples 2 to 5, in which an excessive amount of the large-particle diameter lithium iron phosphate-based oxide was mixed, had a lower rolling density than Comparative Example 1, but the rolling density of Examples 1 and 2, in which a small amount of the large-particle diameter lithium iron phosphate-based oxide was mixed in a weight ratio of 75:25 to 2:98, was increased in comparison to that of Comparative Example 1.

Also, referring to the results of Comparative Examples 7 and 8, it may be understood that with respect to the small-particle diameter lithium iron phosphate-based oxide, even when mixed with the lithium iron manganese phosphate-based oxide having a different particle diameter, an effect of improving the rolling density is insignificant in comparison to a case where the large-particle diameter lithium iron phosphate-based oxide having relatively inferior rolling density was mixed at the same mixing ratio. The reason for this is interpreted to be that, as shown in the results of Experimental Example 1, Examples 1 and 2 were advantageous in terms of space utilization by having a wide bimodal particle size distribution.

**Experimental Example 3: Battery Performance Evaluation**

**<Preparation of Lithium Secondary Battery Half-Cell>**

Each of the positive electrode active materials of Examples 1 and 2 and Comparative Examples 1 and 6 to 9, a carbon black conductive agent, and a PVDF binder were mixed in a N-methylpyrrolidone solvent in a weight ratio of 90:5:5 to prepare a positive electrode slurry, and one surface of an aluminum current collector was coated with the positive electrode slurry, dried at 130°C, and then rolled to prepare each positive electrode.

An electrode assembly was prepared by disposing a porous polyethylene separator between the above-prepared positive electrode and a negative electrode formed of lithium metal, and a lithium secondary battery half-cell was prepared by disposing the electrode assembly in a case and then injecting an electrolyte into the case. As the

electrolyte used, $LiPF_6$ was dissolved in a solvent, in which ethylene carbonate (EC), diethyl carbonate (DEC), and dimethyl carbonate (DMC) were mixed in a volume ratio of 1:2:1 and 2 wt% of vinylene carbonate (VC) was added, such that a concentration of the $LiPF_6$ was 1M.

### 3-1. Capacity Characteristics Evaluation

After the above-prepared half-cells were left standing for 24 hours, each half-cell was charged to at 0.1 C-rate to 4.25 V at 25°C, left standing for 30 minutes, and discharged at 0.1 C-rate to 2.5 V to measure initial charge and discharge capacities, and efficiency (%) was defined as a percentage of the initial discharge capacity relative to the initial charge capacity and presented together with the initial charge and discharge capacities in Table 4 below.

[Table 4]

| | [mAh/g] | | [%] |
|---|---|---|---|
| | Initial charge capacity | Initial discharge capacity | Efficiency |
| Example 1 | 154.0 | 148.9 | 96.7 |
| Example 2 | 154.9 | 151.0 | 97.5 |
| Comparative Example 1 | 153.3 | 147.4 | 96.2 |
| Comparative Example 6 | 162.6 | 159.6 | 98.2 |
| Comparative Example 7 | 153.8 | 148.0 | 96.2 |
| Comparative Example 8 | 154.6 | 148.9 | 96.3 |
| Comparative Example 9 | 162.4 | 158.0 | 97.3 |

Referring to the results in Table 4, it may be confirmed that initial charge and discharge capacities and efficiencies of Comparative Examples 6 and 9, which were composed of the lithium iron phosphate-based oxides, were excellent. However, when comparing the results of Comparative Examples 1, 7, and 8, it may be confirmed that an effect of improving the efficiency was insignificant even if the small-particle diameter lithium iron phosphate-based oxide having excellent initial charge and discharge capacities and efficiency was mixed with the lithium iron manganese phosphate-based oxide, but when comparing the results of Comparative Example 1 and Examples 1 and 2, it may be confirmed that the efficiency of the battery was relatively significantly improved when the large-particle diameter lithium iron phosphate-based oxide was mixed.

### 3-2. Rate Capability Evaluation

The above-prepared half-cell was charged at 0.1 C-rate to 4.25 V at 25°C, left standing for 30 minutes, and discharged at a specific C-rate (1.0 C, 4.0 C) to 2.5 V to measure discharge capacity according to each rate condition, and a capacity development ratio (%) was defined as a percentage of the discharge capacity under each rate condition relative to the initial discharge capacity shown in Table 4 and presented in Table 5 below.

[Table 5]

| | Discharge capacity [mAh/g] | | Capacity development ratio [%] | |
|---|---|---|---|---|
| | 1.0 C | 4.0 C | 1.0 C | 4.0 C |
| Example 1 | 137.7 | 128.4 | 92.5 | 86.2 |
| Example 2 | 139.3 | 129.2 | 92.3 | 85.6 |
| Comparative Example 1 | 136.3 | 127.7 | 92.5 | 86.6 |
| Comparative Example 6 | 143.8 | 132.9 | 90.1 | 83.3 |
| Comparative Example 7 | 135.8 | 126.3 | 91.8 | 85.3 |
| Comparative Example 8 | 135.4 | 125.6 | 90.9 | 84.4 |
| Comparative Example 9 | 134.1 | 117.6 | 84.9 | 74.4 |

Referring to the results in Table 5, it may be confirmed from the results of Comparative Examples 1, 6, and 9 that the lithium iron manganese phosphate-based oxide had better rate capability than the lithium iron phosphate-based oxide. Also, when comparing the results of Examples 1 and 2 and Comparative Example 1, it may be confirmed that in a case in which a small amount of the lithium iron phosphate-based oxide was mixed with the lithium iron manganese phosphate-based oxide, rate capability similar to that of the positive electrode active material composed only of the lithium iron manganese phosphate-based oxide may be achieved even if the lithium iron phosphate-based oxide with inferior rate capability was mixed.

### 3-3. Average Voltage Measurement

An average charging voltage was measured during a charge and discharge process in which the above-prepared half-cell was charged at 0.1 C-rate to 4.25 V at 25°C, left standing for 30 minutes, and then discharged at 0.1 C-rate to 2.5 V, and presented in Table 6 below.

[Table 6]

|  | Average charging voltage [V] |
|---|---|
| Example 1 | 3.85 |
| Example 2 | 3.83 |
| Comparative Example 1 | 3.87 |
| Comparative Example 6 | 3.51 |
| Comparative Example 7 | 3.84 |
| Comparative Example 8 | 3.82 |
| Comparative Example 9 | 3.48 |

Referring to the results in Table 6, it may be confirmed that an average charging voltage of the lithium iron manganese phosphate-based oxide was higher than that of the lithium iron phosphate-based oxide, and that the higher the ratio of the lithium iron manganese phosphate-based oxide to the lithium iron phosphate-based oxide in the positive electrode active material, the higher the average charging voltage. Also, it may be understood that in a case in which the lithium iron phosphate-based oxide was mixed with the lithium iron manganese phosphate-based oxide, the average charging voltage was decreased.

### 3-4. Energy Density Evaluation

Based on the rolling density, average charging voltage, and initial charge capacity values measured in the experimental examples, charged gravimetric energy density and charged volumetric energy density were calculated according to Equations 1 and 2 below and presented in Table 7 below.

Charged gravimetric energy density (Wh/kg) = average charging voltage * 0.1 C charge capacity [Equation 1]

Charged volumetric energy density (Wh/L) = average charging voltage * 0.1 C charge capacity * rolling density [Equation 1]

[Table 7]

|  | Charged gravimetric energy density [Wh/kg] | Charged volumetric energy density [Wh/L] |
|---|---|---|
| Example 1 | 593 | 1536 |
| Example 2 | 593 | 1551 |
| Comparative Example 1 | 593 | 1525 |
| Comparative Example 6 | 571 | 1449 |
| Comparative Example 7 | 591 | 1522 |

(continued)

| | Charged gravimetric energy density [Wh/kg] | Charged volumetric energy density [Wh/L] |
|---|---|---|
| Comparative Example 8 | 591 | 1531 |
| Comparative Example 9 | 565 | 1512 |

Referring to the results in Table 7, it may be confirmed that charged volumetric energy densities of Examples 1 and 2 were the highest. Particularly, that the final volumetric energy density was the highest even though the initial charge capacity was lower than that of Comparative Examples 6 and 9 composed of the lithium iron phosphate-based oxides and the average charging voltage was lower than that of Comparative Example 1 composed of the lithium iron manganese phosphate-based oxides is interpreted to result from the improvement in rolling density, and it means that the mixing ratio of the small-particle diameter lithium iron manganese phosphate-based oxide to the large-particle diameter lithium iron phosphate-based oxide according to the present invention has been optimized to maximize the effect of improving the energy density.

From the above description, it will be understood by those of ordinary skill in the art that various changes in form and details may be made therein without departing from the spirit and scope of the invention as defined by the following claims. Accordingly, it is to be understood that the invention has been described by way of illustration and not limitation. The scope of the invention is defined by the following claims rather than the foregoing detailed description, and it is to be interpreted that all changes or modifications derived from the meaning, scope and equivalent concept of the appended claims are within the scope of the present invention.

## Claims

1. A positive electrode active material comprising:

   a small-particle diameter lithium iron manganese phosphate-based oxide and a large-particle diameter lithium iron phosphate-based oxide,
   wherein the small-particle diameter lithium iron manganese phosphate-based oxide has an average particle diameter ($D_{50}$) of 1 $\mu$m or less,
   the large-particle diameter lithium iron phosphate-based oxide has an average particle diameter ($D_{50}$) of 4 $\mu$m to 10 $\mu$m, and
   the small-particle diameter lithium iron manganese phosphate-based oxide and the large-particle diameter lithium iron phosphate-based oxide are included in a weight ratio of 75:25 to 98:2.

2. The positive electrode active material of claim 1, wherein the average particle diameter ($D_{50}$) of the small-particle diameter lithium iron manganese phosphate-based oxide is 0.5 $\mu$m or less.

3. The positive electrode active material of claim 1, wherein the small-particle diameter lithium iron manganese phosphate-based oxide and the large-particle diameter lithium iron phosphate-based oxide are included in a weight ratio of 90:10 to 95:5.

4. The positive electrode active material of claim 1, wherein the small-particle diameter lithium iron manganese phosphate-based oxide has a composition of Formula 1.

   [Formula 1]     $Li_{1+x}Fe_{1-p-q}Mn_pM_q(PO_4)$

   wherein, in Formula 1,
   M is at least one selected from the group consisting of nickel (Ni), cobalt (Co), aluminum (Al), zirconium (Zr), strontium (Sr), tungsten (W), molybdenum (Mo), chromium (Cr), niobium (Nb), magnesium (Mg), hafnium (Hf), tantalum (Ta), lanthanum (La), titanium (Ti), boron (B), barium (Ba), cerium (Ce), tin (Sn), yttrium (Y), vanadium (V), and zinc (Zn), and $-0.1 \leq x \leq 0.1$, $0.4 \leq p \leq 0.8$, and $0 \leq q \leq 0.1$.

5. The positive electrode active material of claim 1, wherein the large-particle diameter lithium iron phosphate-based oxide is in a form of a secondary particle that is an aggregate of primary particles.

6. The positive electrode active material of claim 1, wherein the large-particle diameter lithium iron phosphate-based oxide has a composition of Formula 2.

[Formula 2]  $LiFe_{1-y}M'_yPO_4$

wherein, in Formula 2,
M' is at least one selected from the group consisting of Ni, Co, Al, Mg, Y, Zn, indium (In), ruthenium (Ru), Sn, antimony (Sb), Ti, tellurium (Te), Nb, Mo, Cr, Zr, W, iridium (Ir), and V, and $0 \leq y < 1$.

7. The positive electrode active material of claim 1, wherein the positive electrode active material has a bimodal particle size distribution.

8. The positive electrode active material of claim 1, wherein the positive electrode active material has a $D_{10}$ of 0.25 $\mu$m to 0.90 $\mu$m.

9. The positive electrode active material of claim 1, wherein the positive electrode active material has a $D_{50}$ of 0.4 $\mu$m to 1.0 $\mu$m.

10. The positive electrode active material of claim 1, wherein the positive electrode active material has a $D_{90}$ of 3.1 $\mu$m to 10.0 $\mu$m.

11. The positive electrode active material of claim 1, wherein the positive electrode active material has a rolling density measured after being pressed at 9 tons of 2.58 g/cc or more.

12. A positive electrode for a lithium secondary battery, the positive electrode comprising the positive electrode active material of claim 1.

13. The positive electrode for a lithium secondary battery of claim 12, wherein the positive electrode has a charged volumetric energy density of 1533 Wh/L or more.

14. A lithium secondary battery comprising the positive electrode for a lithium secondary battery of claim 12.

**TRANSLATION**

## INTERNATIONAL SEARCH REPORT

International application No.

**PCT/KR2025/014127**

### A. CLASSIFICATION OF SUBJECT MATTER

**H01M 4/58**(2010.01)i; **H01M 4/505**(2010.01)i; **H01M 4/36**(2006.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/58(2010.01); H01M 10/052(2010.01); H01M 10/0525(2010.01); H01M 4/04(2006.01); H01M 4/131(2010.01); H01M 4/36(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 양극 활물질 (cathode active material), 소입경 (small diameter particle), 대입경 (large diameter particle), 평균입경 (average particle diameter, D50), 바이모달 (bimodal)

### C. DOCUMENTS CONSIDERED TO BE RELEVANT

| Category* | Citation of document, with indication, where appropriate, of the relevant passages | Relevant to claim No. |
|---|---|---|
| X | KR 10-2024-0088617 A (LG CHEM, LTD. et al.) 20 June 2024 (2024-06-20) abstract; paragraphs [0017]-[0029], [0044], [0046]; claims 1, 3, 5, 6, 9 | 1,2,4-6,12,14 |
| Y | | 3,7-11,13 |
| Y | CN 109301179 A (JIANGSU YUANJING LITHIUM POWDER INDUSTRY CO., LTD.) 01 February 2019 (2019-02-01) abstract; paragraphs [0029]; table 1; claim 1 | 3,11,13 |
| Y | CN 114068920 A (BYD CO., LTD.) 18 February 2022 (2022-02-18) abstract; paragraphs [0025], [0044]; claims 1, 8; figure 1 | 7-10 |
| A | KR 10-2022-0110122 A (LG ENERGY SOLUTION, LTD.) 05 August 2022 (2022-08-05) abstract; claims 1-12 | 1-14 |

☑ Further documents are listed in the continuation of Box C.   ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 December 2025** | **09 December 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/014127**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2005-0044771 A (SEIMI CHEMICAL CO., LTD.) 12 May 2005 (2005-05-12)<br>abstract; claims 1-9 | 1-14 |

Form PCT/ISA/210 (second sheet) (July 2022)

**INTERNATIONAL SEARCH REPORT**
**Information on patent family members**

International application No.

**PCT/KR2025/014127**

| Patent document cited in search report | | | Publication date (day/month/year) | Patent family member(s) | | | Publication date (day/month/year) |
|---|---|---|---|---|---|---|---|
| KR | 10-2024-0088617 | A | 20 June 2024 | CN | 120266287 | A | 04 July 2025 |
| | | | | EP | 4618181 | A1 | 17 September 2025 |
| | | | | WO | 2024-128742 | A1 | 20 June 2024 |
| CN | 109301179 | A | 01 February 2019 | None | | | |
| CN | 114068920 | A | 18 February 2022 | None | | | |
| KR | 10-2022-0110122 | A | 05 August 2022 | CN | 115485879 | A | 16 December 2022 |
| | | | | CN | 115485879 | B | 19 August 2025 |
| | | | | EP | 4131473 | A1 | 08 February 2023 |
| | | | | JP | 2023-528771 | A | 06 July 2023 |
| | | | | JP | 7596009 | B2 | 09 December 2024 |
| | | | | KR | 10-2711992 | B1 | 02 October 2024 |
| | | | | US | 12126020 | B2 | 22 October 2024 |
| | | | | US | 2023-0155127 | A1 | 18 May 2023 |
| | | | | WO | 2022-164281 | A1 | 04 August 2022 |
| KR | 10-2005-0044771 | A | 12 May 2005 | CN | 1312792 | C | 25 April 2007 |
| | | | | CN | 1701451 | A | 23 November 2005 |
| | | | | KR | 10-0629129 | B1 | 27 September 2006 |
| | | | | TW | 200501485 | A | 01 January 2005 |
| | | | | TW | I323524 | B | 11 April 2010 |
| | | | | US | 2005-0220700 | A1 | 06 October 2005 |
| | | | | WO | 2004-082046 | A1 | 23 September 2004 |

Form PCT/ISA/210 (patent family annex) (July 2022)

**REFERENCES CITED IN THE DESCRIPTION**

**Patent documents cited in the description**

- KR 1020240123561

- KR 1020250128654